# DEMANDE DE BREVET EUROPEEN

(11) **EP 1 514 703 A1**
(43) Date de publication de la demande: **16.03.2005**
(21) Numéro de dépôt: 04291856.5
(22) Date de dépôt: 21.07.2004
(51) Int. Cl.: B60C 17/06

(54) **Méthode pour alléger un dispositif de roulage à plat de roue de véhicule automobile et dipositif ainsi obtenu**

(30) Priorité: 12.09.2003 FR 0310738
(71) Demandeur: HUTCHINSON, 75008 Paris (FR)
(72) Inventeur: Tavin, Gérard, 45200 Montargis (FR); Heuze, Olivier, 95290 L'Isle Adam (FR); Simon, Jean-Michel, 92320 Chatillon (FR)
(74) Mandataire: Doireau, Marc

(57) **Abrégé**

Méthode pour alléger un dispositif de roulage à plat (1) pour roue du véhicule automobile, en particulier à jante plate démontable, caractérisée en ce qu'elle consiste à configurer le dispositif de roulage à plat suivant une structure sandwich comprenant une partie annulaire interne rigide (10), une partie annulaire intermédiaire (12) en un matériau souple ou élastiquement déformable et une partie annulaire externe rigide (14), de manière à ce que, en mode de roulage à plat, tous les efforts transmis par la partie externe rigide (14) se répartissent sur toute la circonférence de la partie intermédiaire (12), ce qui permet de réduire l'épaisseur de cette partie intermédiaire et d'alléger le dispositif de roulage à plat.

L'invention concerne aussi un dispositif de roulage à plat mettant en oeuvre la méthode précitée.

## Description

L'invention concerne une méthode pour alléger un dispositif de roulage à plat pour roue de véhicule automobile, en particulier pour roue à jante plate démontable, ainsi qu'un dispositif mettant en oeuvre cette méthode pour permettre au véhicule de parcourir une distance importante à une vitesse relativement élevée avec un pneumatique sans chambre à air qui est partiellement ou totalement dégonflé.

Les dispositifs de roulage à plat connus actuellement sont généralement constitués par un anneau de roulage qui est monté serré autour de la jante de roue à l'intérieur du pneumatique. Cet anneau est formé soit d'une seule pièce relativement souple à laquelle on a retiré une tranche, soit d'au moins deux pièces rigides en arc de cercle ou secteurs. Pour assurer un montage serré de l'anneau autour de la jante, il est nécessaire de prévoir une connectique d'assemblage et de serrage entre les deux extrémités en vis-à-vis des secteurs de l'anneau. Les connectiques d'assemblage et de serrage sont rigides et constitués d'éléments mécaniques tels que vis-écrou par exemple. Or, l'expérience montre que ces connectiques rigides sont l'élément fragile de ces dispositifs de roulage à plat (phénomènes de fatigue par exemple), et de nombreuses solutions sont proposées dans l'art antérieur pour s'affranchir au mieux du problème posé par ces connectiques d'assemblage.

La demanderesse, qui a une grande expérience dans le domaine des dispositifs de roulage à plat, s'est plus particulièrement intéressée au problème de la lourdeur et de la raideur de ces dispositifs et s'est orientée vers des études visant à envisager leur allègement tout en permettant d'en ajuster la raideur.

D'une manière générale, en configuration de roulage à plat avec un anneau de roulage conventionnel, les charges ou efforts s'appliquent localement sur l'anneau qui travaille en compression, ce qui implique un anneau avec une quantité de matière suffisante se traduisant par un certain poids, car à chaque instant une faible partie de l'anneau est sollicitée..

Par conséquent, un but de l'invention est de concevoir un nouveau type de dispositif de roulage à plat présentant une structure allégée tout en satisfaisant aux performances demandées.

A cet effet, l'invention propose une méthode pour alléger un dispositif de roulage à plat pour roue de véhicule automobile, en particulier pour roue à jante plate démontable, qui est caractérisée en ce qu'elle consiste à configurer le dispositif de roulage à plat suivant une structure sandwich comprenant une partie annulaire interne rigide, une partie annulaire intermédiaire en un matériau souple ou élastiquement déformable et une partie annulaire externe rigide, de manière à ce que, en mode de roulage à plat, tous les efforts transmis par la partie externe rigide se répartissent sur toute la circonférence de la partie intermédiaire, ce qui permet de réduire l'épaisseur de cette partie intermédiaire et d'alléger le dispositif de roulage à plat, la totalité de la matière de la partie intermédiaire étant constamment sollicitée.

La méthode selon l'invention consiste également à prévoir une partie annulaire interne rigide qui est creuse, et à bloquer les deux talons du pneumatique sur les deux rebords de jante au moyen de deux bourrelets annulaires solidaires de la partie interne rigide du dispositif de roulage à plat.

D'une manière générale, la méthode peut consister à fabriquer le dispositif de roulage à plat sous la forme d'un anneau d'une seule pièce, et à scinder cet anneau en au moins deux parties pour pouvoir le monter sur la jante, avant de les assembler l'une à l'autre.

L'invention a également pour objet un dispositif de roulage à plat pour roue de véhicule automobile, en particulier à jante plate démontable, ce dispositif étant destiné à se monter sur la jante et à l'intérieur d'un pneumatique sans chambre à air, et est caractérisé en ce qu'il se compose d'au moins trois parties coaxiales et concentriques qui forment une structure de type sandwich avec une partie annulaire interne rigide, une partie annulaire intermédiaire en un matériau souple ou élastiquement déformable, et une partie annulaire externe rigide.

D'une manière générale, un espace annulaire est ménagé entre la jante et la partie intermédiaire souple du dispositif de roulage à plat, et la partie intermédiaire souple est continue ou discontinue.

Selon un mode de réalisation de l'invention, la partie interne rigide du dispositif de roulage à plat comprend deux bourrelets annulaires pour bloquer en position les deux talons du pneumatique sur les deux rebords de jante, respectivement, et la partie interne rigide du dispositif de roulage à plat comprend au moins deux flasques latéraux annulaires, et la partie intermédiaire souple est fixée à la périphérie des deux flasques latéraux à l'intérieur ou à l'extérieur de ceux-ci.

Selon un mode de réalisation de l'invention, la partie rigide externe a une demi-section droite en forme de T avec une âme constituée par un disque avec deux rebords à sa périphérie qui forment la surface de roulage à plat, la partie radialement interne du disque étant rendue solidaire de la partie intermédiaire souple.

A titre d'exemple, la partie rigide externe peut être constituée par un caisson annulaire à parois latérales droites ou inclinées, et la partie intermédiaire souple en un matériau élastomère peut être renforcée par des éléments métalliques, ces éléments pouvant être constitués par des plaques qui s'étendent sensiblement parallèlement aux flasques de la partie interne rigide, sachant que la partie intermédiaire souple peut être également constituée par des plots-ressorts métalliques.

D'une manière générale, les trois éléments constitutifs du dispositif de roulage à plat peuvent avoir différentes formes géométriques dont certaines d'entre elles vont être explicitées par la suite, sachant que ces formes peuvent contribuer à donner au dispositif en configuration de roulage à plat une meilleure tenue sous la contrainte d'une sollicitation axiale dans le cas où le véhicule aborde un virage par exemple.

Un dispositif de roulage à plat selon l'invention n'engendre aucune vibration en mode de roulage normal et ce, quelle que soit la pression de gonflage du pneumatique. Par ailleurs, l'action du dispositif de roulage à plat sur les talons du pneumatique permet notamment d'éviter tout détalonnage possible et d'aider à la motricité.

L'invention s'applique notamment aux véhicules militaires, et elle permet de ramener le poids d'un dispositif de roulage à plat de l'ordre de 20kg à 10-12kg seulement, ce qui représente un allègement de poids de près de 50%. Compte tenu qu'un véhicule militaire peut être équipé de 4, 8 voire 16 roues, l'allègement en poids est considérable, ce qui justifie pleinement l'intérêt de l'invention.

D'autres avantages, caractéristiques et détails de l'invention ressortiront du complément de description qui va suivre en référence à des dessins annexés, donnés uniquement à titre d'exemple et dans lesquels :
- la figure 1 est une demi-vue en coupe axiale d'un premier mode de réalisation d'un dispositif de roulage à plat selon l'invention ;
- les figures 2 à 9 sont également des demi-vues en coupe axiale pour illustrer d'autres modes de réalisation d'un dispositif de roulage à plat selon l'invention ;
- la figure 10 est une demi-vue en coupe axiale d'un mode de réalisation particulier de l'invention ; et
- la figure 11 est une vue schématique de principe pour illustrer la technique de montage du dispositif de roulage à plat de la figure 10 à l'intérieur du pneumatique.

D'une façon usuelle, un dispositif de roulage à plat est logé à l'intérieur d'un pneumatique P sans chambre à air et monté sur la jante 3 d'une roue de véhicule automobile équipée du pneumatique P.

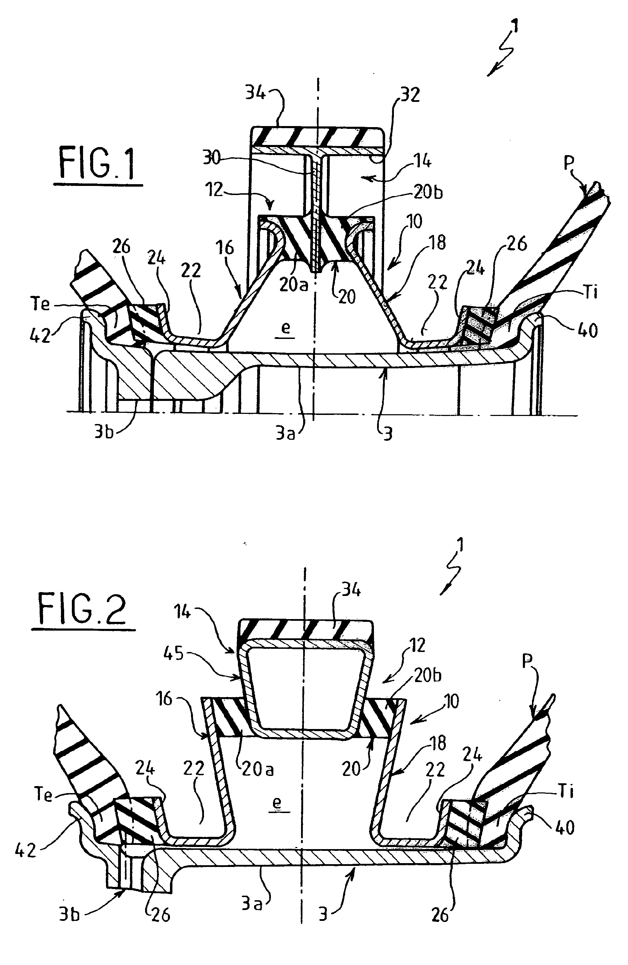

La structure de base d'un dispositif de roulage à plat 1 selon l'invention et telle qu'illustrée sur la figure 1, se compose d'au moins trois parties coaxiales et concentriques qui forment une structure de type sandwich avec une partie annulaire interne rigide 10, une partie annulaire intermédiaire 12 en un matériau souple ou élastiquement déformable et une partie annulaire externe rigide 14. D'une manière générale, la partie interne rigide 10 est creuse et formée d'au moins deux flasques latéraux annulaires rigides 16 et 18 qui peuvent être réalisés en métal ou en un matériau plastique renforcé; la partie intermédiaire souple 12 est formée par une couronne continue ou discontinue 20 en caoutchouc par exemple qui est fixée entre et à la périphérie des deux fiasques 16 et 18 ; et la partie externe rigide 14 est fixée à la couronne souple 20 et sa périphérie forme la surface de roulage à plat sur laquelle peut venir prendre appui la bande de roulement du pneumatique P en configuration de roulage à plat.

Le dispositif de roulage à plat 1 selon l'invention a été spécialement conçu pour une jante plate démontable en au moins deux parties, c'est-à-dire ne présentant pas un creux de jante (ou "drop center" en langue anglaise), ni de puits délimités entre les deux rebords de jante et deux bossages périphériques (ou "hump" en langue anglaise) pour y loger les deux talons interne et externe du pneumatique.

Plusieurs modes de réalisation du dispositif de roulage à plat 1 selon l'invention vont être décrits ci-après.

Selon un premier mode de réalisation illustré à la figure 1, les deux flasques 16 et 18 délimitent, en demi-section droite, une forme tronconique qui s'évase vers l'extérieur en direction de la jante 3. La partie radialement interne de chaque flasque 16 et 18 de la partie interne rigide 10 présente une gorge périphérique 22 à section droite en forme de U et qui est délimitée par un rebord externe 24. Le fond de la gorge 22 délimite le diamètre intérieur du dispositif de roulage à plat 1 d'une part, et sert de surface de contact avec la jante 3 en mode de roulage à plat du pneumatique P d'autre part. Par ailleurs, un bourrelet annulaire 26 en un matériau élastiquement déformable tel du caoutchouc (ou «bead lock » en langue anglaise) est fixé sur la surface périphérique externe de chaque rebord 24 des flasques 16 et 18 pour assurer le blocage en position des talons Ti et Te du pneumatique P sur les rebords de jante.

La couronne 20 de la partie intermédiaire souple 12 est fixée à la périphérie et entre les deux flasques 16 et 18, sachant que cette couronne 20 peut être discontinue sous la forme de plots en un matériau élastomère par exemple, qui sont angulairement régulièrement espacés.

La partie externe rigide 14 a une demi-section droite en forme de T avec une âme centrale constituée par un disque annulaire 30 avec deux rebords 32 à la périphérique du disque 30 pour former la surface de roulage à plat qui peut être avantageusement revêtue d'un revêtement souple 34. La partie radialement interne du disque 30 est rendue solidaire de la partie intermédiaire souple 12. Plus précisément, la couronne intermédiaire souple 20 est formée de deux séries de plots 20a et 20b qui sont séparées par le disque 30 et fixées par vissage ou collage par exemple.

D'une manière générale, le dispositif de roulage à plat peut être fabriqué par moulage de façon à former un anneau d'une seule pièce dont le diamètre intérieur est légèrement supérieur au diamètre de la jante 3, cet anneau étant ensuite coupé suivant un plan diamétral passant par l'axe des flasques 16 et 18 pour former deux demi-anneaux pour des questions de montage sur la jante. Le dispositif de roulage à plat 1 se monte sur la jante plate démontable 3 qui présente deux parties 3a et 3b selon l'exemple de la figure 1. La partie 3a de la jante 3 est une portion de cylindre avec, à une extrémité, un rebord périphérique ou rebord de jante 40. La partie 3b de la jante 3 est globalement formée par un flasque présentant un rebord périphérique ou rebord de jante 42.

Au montage, on monte partiellement le pneumatique P en ne passant que son talon interne Ti sur la partie 3a de la jante 3, on monte ensuite successivement à l'intérieur du pneumatique P les deux demi-anneaux du dispositif de roulage à plat 1 sur la partie 3a de la jante 3 on assemble les deux demi-anneaux pour former un anneau monobloc que l'on fait glisser sur la jante 3 en direction du talon interne Ti du pneumatique P de manière à ce que le bourrelet 26 du flasque 18 vienne au contact du talon interne Ti du pneumatique pour amener ce dernier sensiblement en contact avec le rebord de jante 40; on positionne le talon externe Te du pneumatique P au voisinage du bourrelet 26 du flasque 16 ; on ferme la jante 3 en assemblant la partie 3b de la jante à sa partie 3a de manière à coincer le talon externe Te entre le rebord de jante 42 et le bourrelet 26; et on met le pneumatique P sous pression.

L'assemblage des deux demi-anneaux du dispositif de roulage à plat 1 peut être effectué par tout dispositif approprié tel au moins deux plaques de liaison fixées par des vis par exemple, ou tout autre dispositif techniquement équivalent.

Une fois le dispositif de roulage à plat 1 monté à l'intérieur du pneumatique P, un espace annulaire libre e est défini entre les flasques 16 et 18, la couronne 20 et la jante 3, cet espace e permettant au matériau de la couronne 20 de travailler librement en cisaillement lors d'un roulage à plat.

Le deuxième mode de réalisation illustré sur la figure 2 diffère essentiellement de celui illustré à la figure 1 par la forme des deux flasques 16 et 18, et la structure de la partie externe rigide 14. Plus précisément, les deux flasques 16 et 18 délimitent, en demi-section droite, une forme tronconique qui s'évase vers l'extérieur à partir de la jante 3, et la partie externe rigide 14 du dispositif de roulage à plat 1 est constituée par un caisson annulaire 45 à demi-section droite également de forme trapézoïdale, la grande base formant la surface de roulage à plat. La couronne intermédiaire souple 20 est formée de deux séries de plots 20a et 20b fixées respectivement entre les parois latérales du caisson 45 et les deux flasques 16 et 18.

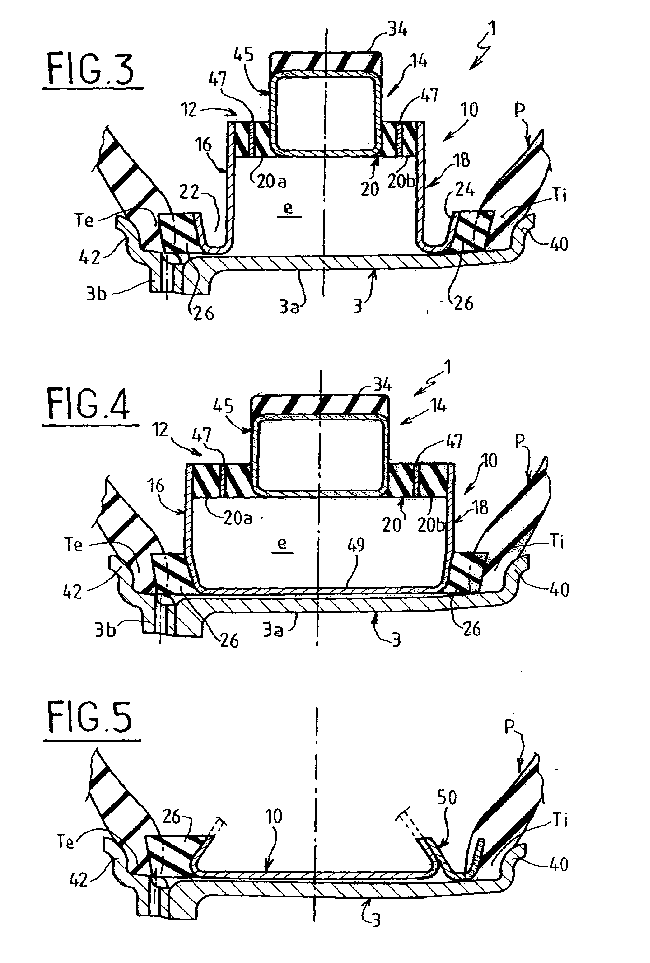

Le troisième mode de réalisation illustré sur la figure 3 est une variante du deuxième mode de réalisation. Les flasques 16 et 18 sont sensiblement parallèles, le caisson annulaire 45 qui forme la partie externe rigide 14 est à demi-section droite de forme rectangulaire et non plus trapézoïdale, et la couronne intermédiaire souple 12 du dispositif de roulage à plat 1 est formée de deux séries de plots 20a et 20b avec présence de renforts métalliques qui permettent d'avoir la même souplesse tout en augmentant la rigidité en compression horizontale. Cette rigidité permet notamment de jouer sur le degré de compression des talons Ti et Te du pneumatique sur les rebords de jante. Les renforts métalliques sont par exemple constitués par des rondelles métalliques 47 noyées dans le caoutchouc et situées dans un plan sensiblement parallèle aux flasques 16 et 18.

En configuration roulage à plat du pneumatique et pour tous les modes de réalisation précédemment décrits, le fond des gorges 22 de la partie interne rigide 10 du dispositif de roulage à plat 1 vient localement en contact avec la jante 3, cette surface de contact devant être néanmoins suffisante pour ne pas endommager la roue.

Le quatrième mode de réalisation illustré à la figure 4 est une variante du troisième mode de réalisation où les deux flasques 16 et 18 de la partie interne rigide 10 ne présentent plus les rebords 24 délimitant les gorges 22. Les flasques 16 et 18 sont sensiblement plans et leurs extrémités radialement internes sont réunies l'une à l'autre par un fond cylindrique discontinu qui entoure la jante 3 avec un léger jeu, ce fond étant continu ou constitué par des tiges 49 par exemple.

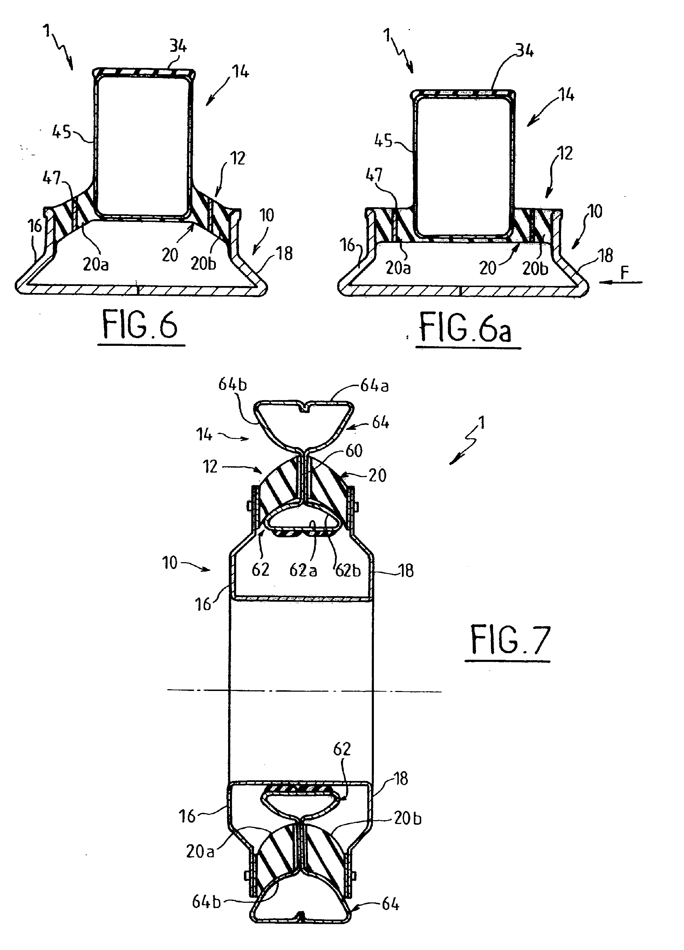

Le cinquième mode de réalisation illustré à la figure 5 montre essentiellement la partie interne rigide 10 du dispositif de roulage à plat où le blocage en position du talon interne Ti du pneumatique P peut être assuré par une couronne d'attache 50 en une seule pièce et à demi-section droite en forme de V par exemple. Les deux ailes de cette attache 50 viennent respectivement en contact par frottement avec le flasque 18 et le talon interne Ti du pneumatique P.

Dans le sixième mode de réalisation illustré sur les figures 6 et 6a, on a cherché à réaliser un dispositif de roulage à plat 1 qui ait une meilleure tenue sous une sollicitation axiale en configuration de roulage à plat. A cet effet, la partie externe rigide 14 est constituée par un caisson annulaire 45 à demi-section droite de forme globalement rectangulaire, et la partie intermédiaire souple 12 est disposée d'une manière inclinée en lui donnant en demi-section droite une forme tronconique dont la grande base est située du côté de la jante 3. Ainsi, en configuration de roulage à plat (figure 6a), la forme tronconique de la partie intermédiaire souple 12 se déforme pour prendre une forme globalement cylindrique qui confère au dispositif de roulage à plat une meilleure tenue sous une sollicitation axiale matérialisée par la flèche F.

Le septième mode de réalisation illustré à la figure 7 est une variante de celui illustré aux figures 6 et 6a pour conférer également au dispositif de roulage à plat 1 une meilleure tenue sous sollicitation axiale en configuration de roulage à plat. La partie annulaire externe rigide 14 a globalement une demi-section droite en forme de diabolo qui comprend une âme centrale constituée par un disque annulaire 60 qui se prolonge par deux parties annulaires creuses interne 62 et externe 64. La partie creuse interne 62 présente une surface périphérique cylindrique 62a et deux surfaces latérales bombées 62b formant un arc de cercle. D'une manière analogue, la partie creuse externe 64 présente une surface périphérique 64a cylindrique, qui peut être avantageusement revêtue d'un revêtement souple, et deux surfaces latérales bombées 64b formant un arc de cercle. La partie intermédiaire annulaire 12 présente une forme tronconique en demi-section droite dont la grande base est sensiblement en contact avec les surfaces latérales bombées 62b de la partie interne creuse 62, comme cela est illustré sur la demi-vue supérieure de la figure 7. Par contre, en configuration de roulage à plat selon la demi-vue inférieure de la figure 7, la partie interne creuse 62 forme une butée qui pénètre dans l'espace e de la partie interne rigide 10 du dispositif de roulage à plat pour venir localement au contact de la jante 3, et la partie intermédiaire annulaire 12 s'est déformée pour prendre en demi-section droite une forme tronconique inversée par rapport à celle de la demi-vue supérieure de la figure 7, c'est-à-dire qu'elle vient sensiblement en contact avec les surfaces latérales bombées 64b de la partie creuse externe 64 de la partie annulaire externe rigide 14.

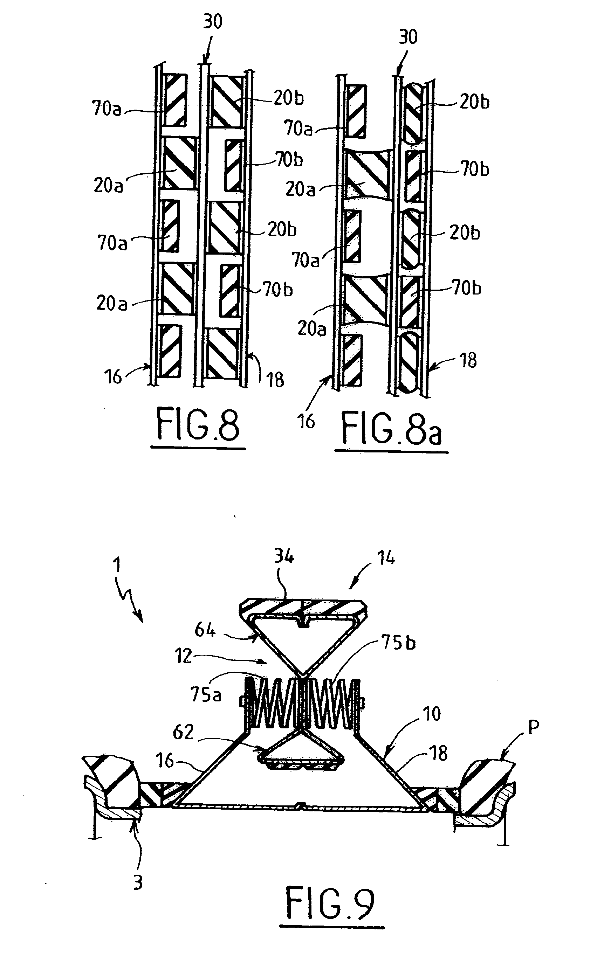

Sur les figures 8 et 8a, on a illustré un exemple de réalisation de la partie intermédiaire souple 12 sous une forme développée pour obtenir également une meilleure tenue sous une sollicitation axiale. En reprenant par exemple le mode de réalisation illustré à la figure 1, on intercale des butées 70a entre les plots 20a et des butées 70b entre les plots 20b de la partie intermédiaire souple 12, de manière à ce que chaque plot 20a solidaire du flasque 16 soit en regard d'une butée 70b solidaire du flasque 18, et que chaque plot 20b solidaire du flasque 18 soit en regard d'une butée 70a solidaire du flasque 16. Les butées 70a et 70b sont situées à distance du disque central 30 et sont destinées à venir au contact dudit disque 30 pour limiter le débattement latéral du dispositif de roulage à plat, comme cela est illustré sur la figure 8a, les butées 70 pouvant procurer une action progressive en jouant sur leur épaisseur ou hauteur, de manière à ce que les butées 70a ou 70b ne viennent pas simultanément en contact avec le disque 30.

Dans tous les modes de réalisation décrits jusqu'à maintenant, la partie intermédiaire souple 12 du dispositif de roulage à plat est constituée par une couronne ou des plots en un matériau élastomère souple comme du caoutchouc par exemple qui est apte à travailler en cisaillement en configuration de roulage à plat. Par contre, selon le dernier mode de réalisation illustré sur la figure 9 et qui est une variante de celui illustré à la figure 7, la partie intermédiaire souple 12 est élastiquement déformable et constituée uniquement par des éléments souples métalliques 75a et 75b sous la forme par exemple de plots ressorts.

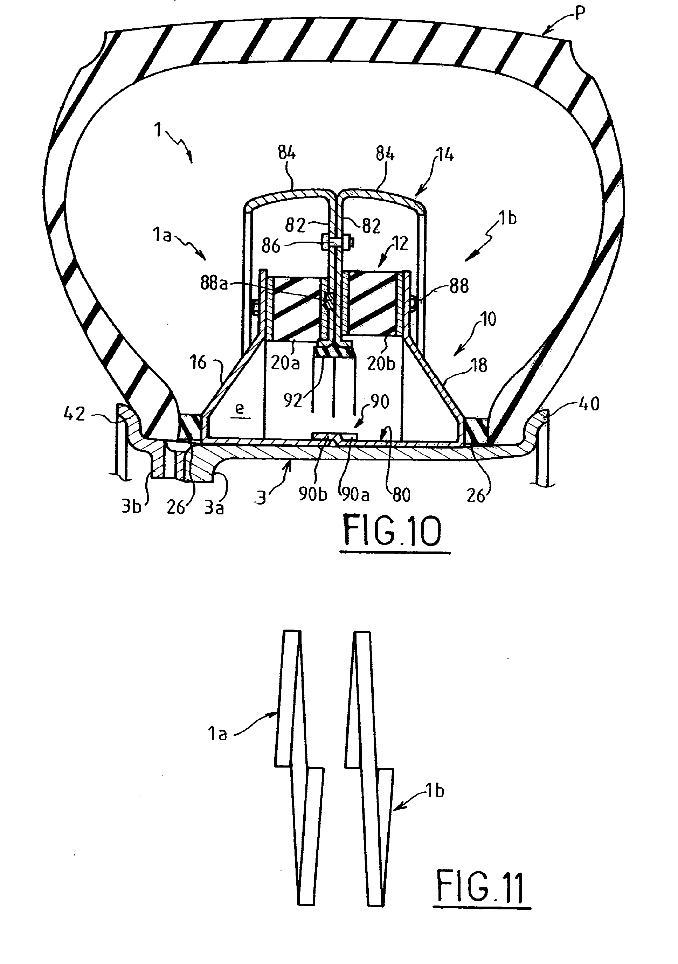

En se reportant à la figure 10, on va décrire maintenant un mode de réalisation de l'invention qui a fait l'objet d'essais qui ont donné entière satisfaction. Le dispositif de roulage à plat 1 est constitué de deux parties semblables coupées 1a et 1b qui sont montées tête-bêche. Les extrémités radialement internes des deux flasques 16 et 18 qui forment la partie annulaire interne rigide 10 du dispositif de roulage à plat 1, forment une surface périphérique cylindrique 80 dont le diamètre est légèrement plus grand que celui de la jante 3. Les extrémités radialement externes des deux flasques 16 et 18 se font face pour recevoir la partie intermédiaire souple 12 du dispositif de roulage à plat 1. Les extrémités radialement internes et externes des deux flasques 16 et 18 sont reliées entre elles par deux parois latérales inclinées pour que la partie annulaire interne 10 délimite un espace annulaire e qui présente en demi-section droite une forme tronconique s'élargissant en direction de la jante 3.

La partie annulaire externe rigide 14 est formée de deux disques annulaires 82 dont les bords périphériques se prolongent d'un seul côté par deux rebords 84 qui définissent la surface de roulement du pneumatique en configuration de roulage à plat. Les deux disques 82 accolés l'un contre l'autre sont fixés ensemble par des boulons 86 par exemple. La partie annulaire intermédiaire souple 12 est constituée de deux séries de plots 20a et 20b angulairement espacés les uns des autres, qui sont montés entre les extrémités radialement externes des deux flasques 16 et 18 de la partie annulaire interne rigide 10 et les parties radialement internes des deux disques 82 de la partie annulaire externe rigide 14. Les plots 20a et 20b sont fixés par des vis 88, sachant que le décalage angulaire entre les deux séries de plots 20a et 20b permet le passage des vis 88 au travers de trous 88a percés dans les deux disques accolés 82.

Les deux parties des flasques 16 et 18 qui forment la surface périphérique 80 de la partie annulaire interne rigide 10 sont reliées l'une à l'autre par un dispositif d'agrafage 90 pour les solidariser en rotation. Ce dispositif d'agrafage 90 peut être constitué par deux séries de doigts 90a et 90b qui s'imbriquent les uns dans les autres.

Deux bourrelets annulaires 26 sont collés de part et d'autre des deux flasques 16 et 18 pour assurer le blocage des positions des talons Ti et Te du pneumatique P contre les rebords de jante 40 et 42.

Avantageusement, un patin 92 formant une butée d'amortissement est fixé aux extrémités radialement internes des deux disques 82. Ce patin 92 est destiné à venir au contact de la jante 3 en configuration de roulage à plat du pneumatique P. Un tel patin 92 peut également être prévu dans les autres modes de réalisation.

La technique de montage du dispositif de roulage à plat qui vient d'être décrit est la suivante. On pré-assemble séparément les deux parties 1a et 1b, on introduit les deux parties 1a et 1b à l'intérieur du pneumatique P après les avoir déformées par vrillage comme cela est schématiquement illustré à la figure 11, on assemble l'une à l'autre les deux parties 1a et 1b montées tête-bêche, on positionne les deux parties assemblées 1a et 1b sur la demi-jante principale 3a de la roue, et on vient fixer ensuite la demi-jante secondaire 3b de la roue pour serrer l'ensemble.

## Revendications

1. Méthode pour alléger un dispositif de roulage à plat (1) pour roue du véhicule automobile, en particulier à jante plate démontable, **caractérisée en ce qu'**elle consiste à configurer le dispositif de roulage à plat suivant une structure sandwich comprenant une partie annulaire interne rigide (10), une partie annulaire intermédiaire (12) en un matériau souple ou élastiquement déformable et une partie annulaire externe rigide (14), de manière à ce que, en mode de roulage à plat, tous les efforts transmis par la partie externe rigide (14) se répartissent sur toute la circonférence de la partie intermédiaire (12), ce qui permet de réduire l'épaisseur de cette partie intermédiaire et d'alléger le dispositif de roulage à plat.

2. Méthode selon la revendication 1, **caractérisée en ce qu'**elle consiste à ménager un espace annulaire (e) entre la partie intermédiaire souple (12) et la surface périphérique de la jante (3).

3. Méthode selon la revendication 1 ou 2, **caractérisée en ce qu'**elle consiste à bloquer les deux talons (Ti, Te) du pneumatique (P) sur les deux rebords de jante (40, 42) au moyen de deux bourrelets annulaires (26) solidaires de la partie interne rigide (10) du dispositif de roulage à plat (1).

4. Méthode selon l'une quelconque des revendications précédentes, **caractérisée en ce qu'**elle consiste à monter avec un léger jeu le dispositif de roulage à plat sur la jante.

5. Méthode selon l'une quelconque des revendications précédentes, **caractérisée en ce qu'**elle consiste à réaliser la partie annulaire intermédiaire sous la forme d'une couronne discontinue de plots réalisée en un matériau élastomère ou sous la forme de plots-ressorts métalliques.

6. Méthode selon l'une quelconque des revendications précédentes, **caractérisée en ce qu'**elle consiste à fabriquer le dispositif de roulage à plat (1) en deux parties semblables (1a, 1b) qui sont coupées, à pré-assembler chacune des deux parties (1a, 1 b), à introduire les deux parties (1a, 1b) à l'intérieur du pneumatique en les déformant par vrillage, à assembler tête-bêche les deux parties (1a, 1b) à l'intérieur du pneumatique (P), et à positionner l'ensemble de la jante de roue (3).

7. Dispositif de roulage à plat pour roue de véhicule automobile, en particulier à jante plate démontable (3), ce dispositif (1) étant destiné à se monter sur la jante (3) et à l'intérieur d'un pneumatique (P) sans chambre à air, **caractérisé en ce qu'**il se compose d'au moins trois parties coaxiales et concentriques qui forment une structure de type sandwich avec une partie annulaire interne rigide (10), une partie annulaire intermédiaire (12) en un matériau souple ou élastiquement déformable, et une partie annulaire externe rigide (14).

8. Dispositif selon la revendication 7, **caractérisée en ce que** le matériau de la partie intermédiaire souple travaille (12) en cisaillement en configuration de roulage à plat du pneumatique (P).

9. Dispositif selon l'une quelconque des revendications 7 ou 8, **caractérisé en ce qu'**un espace annulaire (e) est ménagé entre la jante (3) et la partie intermédiaire souple (12) du dispositif de roulage à plat.

10. Dispositif selon l'une quelconque des revendications 7 à 9, **caractérisé en ce que** la partie intermédiaire souple (12) est sensiblement continue ou discontinue.

11. Dispositif selon l'une quelconque des revendications 7 à 10, **caractérisé en ce que** le diamètre interne du dispositif de roulage à plat (1) est légèrement supérieur au diamètre externe de la jante (3).

12. Dispositif selon l'une quelconque des revendications 7 à 11, **caractérisé en ce que** la jante (3) présente deux rebords de jante (40, 42), et **en ce que** la partie interne rigide (10) du dispositif de roulage à plat comprend deux bourrelets annulaires (26) en un matériau élastiquement déformable pour bloquer en position les deux talons (Ti, Te) du pneumatique sur les deux rebords de jante (40, 42), respectivement.

13. Dispositif selon la revendication 12, **caractérisé en ce que** la partie interne rigide (10) du dispositif de roulage à plat comprend au moins deux flasques latéraux annulaires (16, 18), et **en ce que** la partie intermédiaire souple (12) est fixée à la périphérie des deux flasques latéraux (16, 18) et à l'intérieur ou l'extérieur de ceux-ci.

14. Dispositif selon l'une quelconque des revendications 7 à 13, **caractérisé en ce que** la partie annulaire intermédiaire souple (12) du dispositif de roulage à plat (1) est constituée de deux séries de plots (20a, 20b) en un matériau souple.

15. Dispositif selon la revendication 14, **caractérisé en ce que** les deux séries de plots (20a, 20b) sont constitués par des lames-ressorts métalliques.

16. Dispositif selon la revendication 14 ou 15, **caractérisé en ce que** les deux séries de plots (20a, 20b) sont angulairement décalés les uns par rapport aux autres.

17. Dispositif selon l'une des revendications 13 à 16, **caractérisé en ce que** la partie radialement interne de chaque flasque (16, 18) de la partie interne rigide (10) du dispositif de roulage à plat présente une gorge périphérique (22) en forme de U et qui est délimitée par un rebord externe (24).

18. Dispositif selon la revendication 17, **caractérisé en ce qu'**un bourrelet annulaire (26) est fixé sur la surface périphérique externe de chaque rebord (24) des flasques.

19. Dispositif selon l'une des revendications 13 à 17, **caractérisé en ce que** les extrémités radialement internes des deux flasques latéraux (16, 18) de la partie interne rigide (10) sont réunies l'une à l'autre par un fond cylindrique discontinu qui entoure la jante (3) avec un léger jeu.

20. Dispositif selon l'une quelconque des revendications 7 à 19, **caractérisé en ce que** la partie rigide externe (14) a une demi-section droite en forme de T avec une âme constituée par un disque (30) avec deux rebords (32) à sa périphérie qui forment la surface de roulage à plat, la partie radialement interne du disque (30) étant rendue solidaire de la partie intermédiaire souple (12).

21. Dispositif selon la revendication 20, **caractérisé en ce que** la partie rigide externe (14) est constituée par un caisson annulaire (25) à parois latérales droites ou inclinées.

22. Dispositif selon l'une quelconque des revendications 7 à 21, **caractérisé en ce que** la partie intermédiaire souple (12) est renforcée par des éléments métalliques (47).

23. Dispositif selon la revendication 22, **caractérisé en ce que** les éléments métalliques (47) sont constitués par des plaques qui s'étendent sensiblement parallèlement aux flasques de la partie interne rigide (10).

24. Dispositif selon l'une quelconque des revendications 7 à 23, **caractérisé en ce que** la partie intermédiaire souple est réalisée en un matériau souple (12) et est inclinée de manière à lui donner une forme tronconique en demi-section droite pour une meilleure tenue sous une sollicitation axiale en configuration de roulage à plat.

25. Dispositif selon l'une quelconque des revendications 7 à 24, **caractérisé en ce que** la partie annulaire externe (14) du dispositif de roulage à plat a une forme en diabolo en demi-section droite.

26. Dispositif selon la revendication 25, **caractérisé en ce que** la partie annulaire externe (14) présente un disque annulaire central (60) qui se prolonge par deux parties creuses interne (62) et externe (64).

27. Dispositif selon la revendication 26, **caractérisé en ce que** la partie creuse interne (62) forme une butée apte à venir localement en appui sur la jante (3) en configuration de roulage à plat.

28. Dispositif selon l'une des revendications 7 à 16, **caractérisé en ce que** le dispositif est réalisé en deux parties semblables coupées (1a, 1b), la partie annulaire interne rigide (10) formée de deux flasques (16, 18) présentant une surface périphérique cylindrique (80) dont le diamètre est légèrement supérieur à celui de la jante (3), la partie intermédiaire souple (12) étant constitués de deux séries de plots (20a, 20b) angulairement espacés les uns des autres, et la partie annulaire externe rigide (14) étant constituée de deux disques annulaires (82) accolés l'un à l'autre et dont les bords périphériques se prolongent d'un seul côté par deux rebords (84) définissant la surface de roulement du pneumatique (P) en configuration de roulage à plat.

29. Dispositif selon la revendication 28, **caractérisé en ce que** les deux parties des flasques (16, 18) de la partie annulaire interne rigide (10) qui forment la surface périphérique cylindrique (80) sont assemblées l'une à l'autre par un dispositif d'agrafage (90).

30. Dispositif selon la revendication 29, **caractérisé en ce que** le dispositif d'agrafage (90) est constitué par deux série de doigts (90a, 90b) qui s'imbriquent les uns dans les autres.
